(19) **Europäisches Patentamt / European Patent Office / Office européen des brevets**

(11) **EP 4 563 272 A1**

(12) **EUROPEAN PATENT APPLICATION**
published in accordance with Art. 153(4) EPC

(43) Date of publication:
**04.06.2025 Bulletin 2025/23**

(21) Application number: **23868130.8**

(22) Date of filing: **14.09.2023**

(51) International Patent Classification (IPC):
**B23K 11/11** *(2006.01)*    **B23K 11/16** *(2006.01)*

(52) Cooperative Patent Classification (CPC):
**B23K 11/11; B23K 11/16**

(86) International application number:
**PCT/JP2023/033590**

(87) International publication number:
**WO 2024/063009 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.09.2022 JP 2022150135**

(71) Applicant: **JFE Steel Corporation**
**Tokyo 100-0011 (JP)**

(72) Inventors:
• **SAWANISHI, Chikaumi**
  **Tokyo 100-0011 (JP)**
• **KANAZAWA, Tomomi**
  **Tokyo 100-0011 (JP)**
• **TAKASHIMA, Katsutoshi**
  **Tokyo 100-0011 (JP)**
• **MATSUDA, Hiroshi**
  **Tokyo 100-0011 (JP)**
• **YAMAMOTO, Shunsuke**
  **Tokyo 100-0011 (JP)**
• **HOSHINO, Katsuya**
  **Tokyo 100-0011 (JP)**
• **KAWANO, Takashi**
  **Tokyo 100-0011 (JP)**

(74) Representative: **Hoffmann Eitle**
**Patent- und Rechtsanwälte PartmbB**
**Arabellastraße 30**
**81925 München (DE)**

(54) **WELDED MEMBER AND METHOD FOR PRODUCING SAME**

(57)    It is an object to provide a welded member and a method for producing the welded member. The invention relates to a welded member prepared by resistance-spot-welding a sheet set including two or more overlapping steel sheets. The total thickness $t_{all}$ of the sheet set and the minimum thickness $t_{weld}$ of the resistance spot weld satisfy formula (1), and at least one of the two or more steel sheets is a steel sheet having a softened layer in a steel sheet surface layer. In a base metal zone in the steel sheet having the softened layer, the nanoindentation hardness $Hbs$ of the steel sheet surface layer and the nanoindentation hardness $Hbt$ inside the steel sheet satisfy formula (2).

$$0.5 < t_{weld} / t_{all} < 1.0 \quad (1)$$

$$0.2 < Hbs / Hbt < 0.8 \quad (2)$$

FIG. 2

**Description**

Technical Field

The present invention relates to a welded member produced by resistance-spot-welding steel sheets and more particularly to a welded member suitable for members of structural parts of automobiles etc. and a method for producing the welded member.

Background Art

In recent years, increasing environmental concerns have led to stringent $CO_2$ emission regulations. One challenge in the field of automobiles is to reduce the weight of vehicle bodies for the purpose of improving fuel economy. Therefore, automotive parts are being reduced in thickness by using high strength steel sheets, and steel sheets having a tensile strength (TS) of 980 MPa or more are being increasingly used. From the viewpoint of corrosion resistance, steel sheets with coatings such as zinc having a rustproofing function are used for portions to be exposed to rainwater.

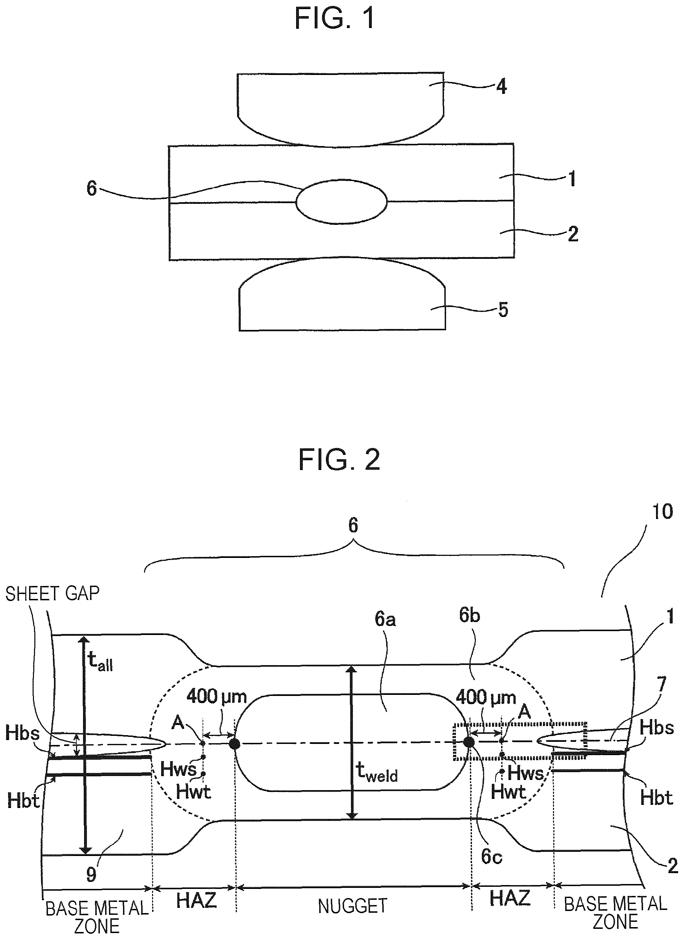

In automotive assembly, press-formed automotive parts are often combined together by resistance spot welding, from the viewpoint of cost and production efficiency. To join overlapping steel sheets together, a resistance spot welding method, which is one type of lap resistance welding, is generally used. In this welding method, two or more overlapping steel sheets are held between a vertical pair of welding electrodes, and a high welding current is applied between the upper and lower electrodes for a short time while the steel sheets are pressed between the upper and lower welding electrodes to thereby join the steel sheets together. Fig. 1 shows an example in which two overlapping steel sheets 1 and 2 held between welding electrodes 4 and 5 are resistance-spot-welded. In this method, resistance heat generated by the application of a high welding current is used to obtain a spot-shaped weld 6. The spot-shaped weld 6 is called a nugget. Specifically, when the current is applied to the overlapping steel sheets, the steel sheets 1 and 2 are melted at their contact portion and then solidified to form the nugget. The steel sheets are thereby jointed together at the spot.

To ensure crash safety, it is necessary to improve the strength of the steel sheets and to improve the strength of the weld. Various test methods have been used to evaluate the strength of the resistance spot weld, and one general evaluation method is a tensile shear test specified in JIS Z 3136. In this test method, a tensile load is applied to a welded joint in a tensile shear direction to measure the tensile shear strength (hereinafter referred to as TSS).

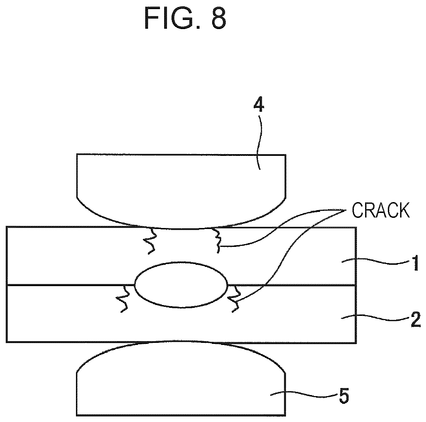

One problem with resistance spot welding of a sheet set including a plurality of overlapping steel sheets including a surface-treated steel sheet is that cracking can occur in the weld, as shown in Fig. 8. The surface-treated steel sheet is a steel sheet having a metal coated layer on the surface of a base metal (base steel sheet). Examples of the metal coating include: zinc coatings typified by electrogalvanized coatings and hot-dip galvanized coatings (including hot-dip galvannealed coatings); and zinc alloy coatings containing, in addition to zinc, another element such as aluminum or magnesium. The melting points of the zinc coatings and the zinc alloy coatings are lower than the melting point of the base metal of the surface-treated steel sheet, and therefore the following problem occurs.

It has been considered that the cracking in the weld is caused by so-called liquid metal embrittlement (hereinafter referred to as "LME cracking"). Specifically, the low-melting point metal coated layer on the surface of the steel sheet melts during welding. When the welding pressure from the electrodes or tensile stress due to thermal expansion and contraction of the steel sheets is applied to the weld, the molten low-melting point metal penetrates into grain boundaries of the base metal of the surface-treated steel sheet and causes a reduction in grain boundary strength, and the cracking thereby occurs. The LME cracking occurs at various positions such as the surfaces of the steel sheets 1 and 2 that are in contact with the welding electrodes 4 and 5 and the surfaces of the steel sheets 1 and 2 at which the steel sheets are in contact with each other, as shown in Fig. 8.

Examples of the measures against the LME cracking include techniques in Patent Literature 1 to Patent Literature 3. In Patent Literature 1, a steel sheet in a sheet set has a chemical composition in a specific range. Specifically, the steel sheet proposed has a chemical composition including, in % by weight, C: 0.003 to 0.01%, Mn: 0.05 to 0.5%, P: 0.02% or less, sol. Al: 0.1% or less, Ti: $48 \times (N / 14)$ to $48 \times \{(N / 14) + (S / 32)\}\%$, Nb: $93 \times (C / 12)$ to 0.1%, B: 0.0005 to 0.003%, N: 0.01% or less, and Ni: 0.05% or less, with the balance being Fe and incidental impurities.

Patent Literature 2 proposes a spot welding method for high strength coated steel sheets. In this resistance spot welding method for high strength coated steel sheets, resistance spot welding is performed while the welding energization time and the holding time after welding energization are set such that the following conditional expressions (A) and (B) are satisfied.

$$0.25 \times (10 \times t + 2) / 50 \leq WT \leq 0.50 \times (10 \times t + 2) / 50 \text{ (A)} \qquad \text{(A)}$$

$$300 - 500 \times t + 250 \times t^2 \leq HT \qquad (2)$$

In the conditional expressions (A) and (B), t is the thickness (mm) of the sheets, WT is the welding energization time (ms), and HT is the holding time (ms) after welding energization.

Patent Literature 2 also proposes that the welding is performed using high tensile galvanized steel sheets with the amounts of alloying elements in the steel sheets set to be equal to or less than specific values while the energization time and the holding time of the electrodes after energization are set according to the thickness of the steel sheets.

Patent Literature 3 proposes a method that uses an energization pattern including multi-stage energization having three or more stages. Specifically, welding conditions such as energization time and welding current are controlled such that an appropriate current range (ΔI) is 1.0 kA or more and preferably 2.0 kA or more, and a cooling period is provided between the stages. The above appropriate current range is a current range in which a nugget having a diameter equal to or more than a desired nugget diameter and an unmelted thickness of 0.05 mm or more can be stably formed.

Citation List

Patent Literature

PTL 1: Japanese Unexamined Patent Application Publication No. 10-195597
PTL 2: Japanese Unexamined Patent Application Publication No. 2003-103377
PTL 3: Japanese Unexamined Patent Application Publication No. 2003-236676

Summary of Invention

Technical Problem

However, one problem with Patent Literature 1 is that the need to limit the amounts of the alloying elements in the steel sheets limits the application of the steel sheets that meet the required performance. In particular, since the degree of alloying in recent steel sheets having increased strength is increasing, the applications of the steel sheets in Patent Literature 1 are extremely limited.

Patent Literature 2 proposes only the method for preventing cracking when the welding current is set to an excessively large value that causes splashes, and no reference is made to cracking in a state in which no splashes occur.

Problems with Patent Literature 3 are that many man-hours are required to obtain appropriate welding conditions and that the method cannot be applied to steel sheets and sheet sets in which the appropriate current range is not easily maintained. Moreover, in Patent Literature 2 and Patent Literature 3, the influence of the inclination angle of the electrodes is not studied, and therefore the measures against this influence are insufficient in some cases, in consideration of the actual operation performed during the assembly of automobiles.

By summarizing the common problem with Patent Literature 1 to Patent Literature 3 with consideration given to the joint strength, a technique for preventing the occurrence of LME cracking while the strength of the weld in the high strength steel sheet is maintained has not been proposed.

The present invention has been made in view of the foregoing circumstances, and it is an object to provide a welded member having a resistance spot weld which can have high strength even in a high strength steel sheet and in which the occurrence of LME cracking is prevented and to provide a method for producing the welded member.

Solution to Problem

To achieve the above object, the inventors have conducted extensive studies.

The effects of the invention on cracking (LME cracking) that occurs during welding cannot be described simply because various influencing factors are involved in a complex manner. However, LME cracking tends to occur in a resistance spot weld when excessively large tensile residual stress is generated in the resistance spot weld due to work disturbances etc. during welding. In particular, it is known that, on a steel sheet faying surface side on which the steel sheets are in contact with each other, LME cracking is likely to occur in a region in which large local tensile stress is generated when the pair of welding electrodes are released after completion of energization and pressurization for resistance spot welding. Therefore, as described in reference 1 below, by using a steel sheet having a softened layer in a surface layer of the steel sheet as one of the overlapping steel sheets, the tensile residual stress in the resistance spot weld can be reduced, so that the occurrence of LME cracking may be prevented.

[Reference 1] International Publication No. WO2021/019947

However, even when the steel sheet having the softened layer in the surface layer is used, the microstructure in the weld heat affected zone may be changed due to the influence of heat during welding, or alloying elements such as C may diffuse, so that the softened layer in the steel sheet surface layer in the weld heat affected zone may disappear. In this case, the intended effects of the invention cannot be obtained. Moreover, if the surface of the weld heat affected zone, particularly the steel sheet surface layer on the steel sheet faying surface side, is significantly soft, the strength of the resistance spot weld decreases. In view of the above, the inventors have arrived at the idea that, by controlling the hardness of the softened layer in the steel sheet surface layer in the weld heat affected zone within a given range, the strength of the resistance spot weld can be ensured and also the occurrence of LME cracking can be prevented.

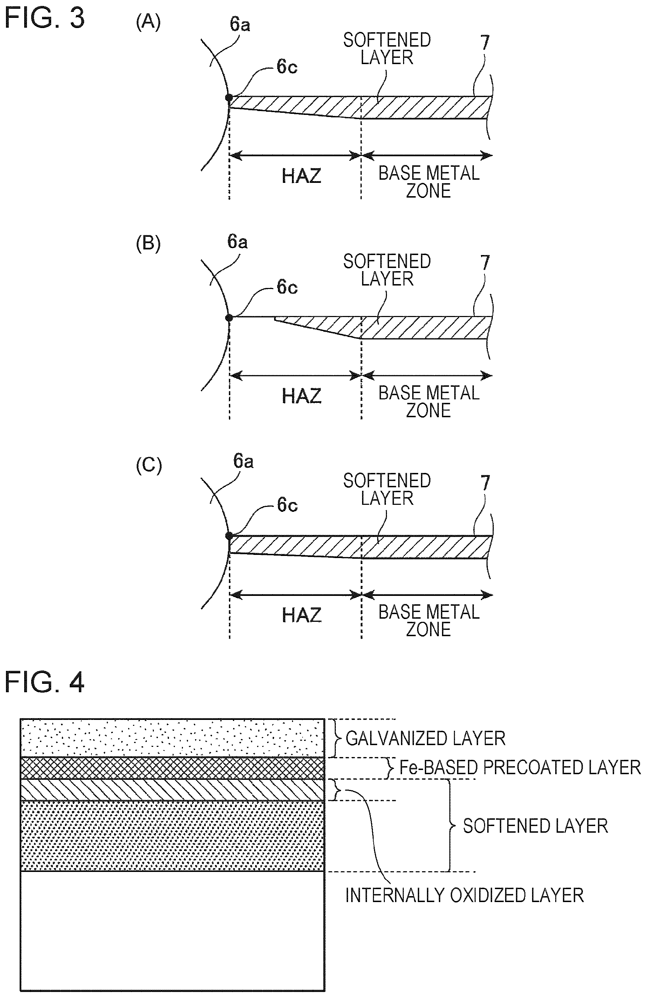

Next, the "softened layer in the steel sheet surface layer in the weld heat affected zone" will be described using Fig. 3. Figs. 3(A) to 3(C) are enlarged cross-sectional views each showing a weld heat affected zone (HAZ) of a welded member and the periphery thereof in a region corresponding to a region surrounded by a rectangular frame in Fig. 2 described later. The cross-sectional views in Fig. 3 are illustrations used to explain the softened layer, and the gap between the sheets shown in Fig. 2 is omitted. In each of the examples shown in Figs. 3(A) to 3(C), the steel sheet disposed on the lower side (i.e., the lower sheet) is the "steel sheet having the softened layer in the steel sheet surface layer" used in the invention.

As shown in Figs. 3(A) to 3(C), a welded member obtained by resistance-spot-welding a sheet set including a steel sheet having a softened layer in a steel sheet surface layer has the softened layer in the surface layer of the lower sheet that is located on the steel sheet faying surface 7 side. The softened layer is present in a weld heat affected zone (HAZ) and in a base metal zone. As shown in Fig. 3(A), the softened layer in the weld heat affected zone basically decreases in thickness as one approaches a nugget 6a. However, as the influence of heat during welding increases, part of the softened layer in the weld heat affected zone may disappear completely due to diffusion of elements such as C as shown in Fig. 3(B), or the softened layer in the weld heat affected zone may not substantially disappear but remain as shown in Fig. 3(C). In the present invention, softened layers present in weld heat affected zones that include those in the states shown in Figs. 3(A) to 3(C) are collectively referred to as the "softened layer in the steel sheet surface layer in the weld heat affected zone."

The present invention is based on the above findings and summarized as follows.

[1] A welded member having a resistance spot weld formed by resistance-spot-welding a sheet set including two or more overlapping steel sheets,

wherein a total thickness of the sheet set is denoted as $t_{all}$, wherein a minimum thickness of the resistance spot weld is denoted as $t_{weld}$, wherein $t_{all}$ and $t_{weld}$ satisfy formula (1),
wherein at least one of the two or more steel sheets is a steel sheet having a softened layer in a steel sheet surface layer,
wherein, in a base metal zone in the steel sheet having the softened layer, a nanoindentation hardness at a position spaced 20 $\mu$m from a surface of the softened layer in a thickness direction is denoted as Hbs, and a nanoindentation hardness at a position spaced 1/4 a thickness from the surface of the softened layer in the thickness direction is denoted as Hbt, and wherein Hbs and Hbt satisfy formula (2):

$$0.5 < t_{weld} / t_{all} < 1.0, \quad (1)$$

$$0.2 < Hbs / Hbt < 0.8. \quad (2)$$

[2] The welded member according to [1], wherein, in a weld heat affected zone in the steel sheet having the softened layer, when a position that is located on a steel sheet faying surface and is spaced 400 $\mu$m from an edge of a nugget of the resistance spot weld in a direction toward a base metal is defined as a starting point, a nanoindentation hardness at a position spaced 20 $\mu$m from the starting point in the thickness direction is denoted as Hws, and a nanoindentation hardness at a position spaced 1/4 the thickness from the starting point in the thickness direction is denoted as Hwt, and wherein Hws, Hwt, and Hbs satisfy formulas (3) and (4):

$$0.2 < Hws / Hwt < 1.0, \quad (3)$$

$$0.8 < Hws / Hbs < 7.0. \quad (4)$$

EP 4 563 272 A1

[3] The welded member according to [1] or [2], wherein a thickness of the steel sheet is denoted as t (mm), and a tensile strength of the steel sheet is denoted as TS (MPa), and

wherein the steel sheet having the softened layer satisfies formula (5):

$$-\{(1000 \times t / TS) - 0.25\} / 35 + 0.2 < (Hws / Hwt) < 1.0, \quad (5) \tag{5}$$

where, in formula (5), Hws is a nanoindentation hardness at a position spaced 20 $\mu$m from the starting point in the thickness direction, and Hwt is a nanoindentation hardness at a position spaced 1/4 the thickness from the starting point in the thickness direction.

[4] The welded member according to any one of [1] to [3], wherein the steel sheet having the softened layer includes a Si internally oxidized layer and/or a galvanized layer.

[5] The welded member according to [4], wherein an Fe-based precoated layer is disposed below the galvanized layer.

[6] The welded member according to any one of [1] to [5], wherein an average of a shortest distance from a center of a welding point of the resistance spot weld to an end face of the steel sheets is 3 mm or more, and wherein, when the welded member has a plurality of the welding points, an average of center-to-center distances between adjacent ones of the welding points is 6 mm or more.

[7] A method for producing the welded member according to any one of [1] to [6], the method including:

a preparation step of disposing the two or more steel sheets so as to overlap each other to form the sheet set; and a welding step of resistance-spot-welding the sheet set, wherein, in the welding step, the sheet set is held between a pair of welding electrodes to perform energization for joining under application of pressure, wherein the energization is performed at a welding pressure of 2.0 to 10.0 kN and a welding current of 4.0 to 15.0 kA for an energization time of 0.1 to 2.0 s, and wherein the welding step further includes an electrode holding step in which, when a welding pressure holding time after completion of the energization is denoted as Th (s), Th (s) satisfies the relation of formula (7):

$$\{(Hbs / Hbt) - 0.2\} / 30 < Th < [-\{(Hbs / Hbt) - 0.2\} / 3] + 1.2, \quad (7) \tag{7}$$

where, in formula (7), Hbs is the nanoindentation hardness at the position spaced 20 $\mu$m from the surface of the softened layer in the thickness direction within the base metal zone, and Hbt is the nanoindentation hardness at the position spaced 1/4 the thickness from the surface of the softened layer in the thickness direction within the base metal zone.

[8] The method for producing the welded member according to [7], wherein, when the sheet set is held between the pair of welding electrodes to perform the energization for joining under the application of the pressure, one or two or more of states (a) to (e) are satisfied at at least one welding point immediately before the application of the pressure by the welding electrodes:

(a) a state in which an inclination angle between the welding electrodes and the overlapping steel sheets is 0.2 degrees or more;
(b) a state in which an amount of offset between the pair of welding electrodes is 0.1 mm or more;
(c) a state in which a gap of 0.5 mm or more is present between one of the welding electrodes and the overlapping steel sheets;
(d) a state in which a gap of 0.5 mm or more is present between at least one pair of steel sheets among the overlapping steel sheets; and
(e) a state in which a shortest distance from a center of the at least one welding point to a steel sheet end face of the overlapping steel sheets is 10 mm or less. Advantageous Effects of Invention

In the present invention, even with resistance spot welding using a high strength steel sheet, a welded member and a method for producing the welded member can be provided in which a reduction in strength of the resistance spot weld caused by softening of the steel sheet surface layer can be prevented and no LME cracking occurs.

Brief Description of Drawings

[Fig. 1] Fig. 1 is a cross-sectional view schematically showing an example of resistance spot welding in the invention.

[Fig. 2] Fig. 2 shows cross-sectional views schematically showing a resistance spot weld of a welded member in one embodiment of the invention and the periphery thereof.

[Fig. 3] Figs. 3(A) to 3(C) are enlarged cross-sectional views each illustrating a softened layer in a steel sheet surface layer in a weld heat affected zone.

[Fig. 4] Fig. 4 is a cross-sectional view in a thickness direction illustrating an example of a steel sheet used in the invention and having a softened layer in a steel sheet surface layer.

[Fig. 5] Fig. 5 is an illustration explaining the shortest distance ($H_1$) from the center of a welding point to an end face of steel sheets in the welded member of the invention.

[Fig. 6] Fig. 6 is an illustration explaining the center-to-center distance ($H_2$) between adjacent welding points in the welded member of the invention.

[Fig. 7] Fig. 7 is a cross-sectional view illustrating an example of a tensile test in Examples of the invention when a sheet set including three sheets is used.

[Fig. 8] Fig. 8 is a cross-sectional view schematically showing an example of the occurrence of cracking during conventional resistance spot welding.

Description of Embodiments

Embodiments of the welded member of the invention and the method for producing the welded member will be described. However, the invention is not limited to these embodiments.

Referring first to Figs. 1 and 2, the welded member of the invention will be described.

Fig. 1 shows an example in which two steel sheets are resistance-spot-welded together. Fig. 2 shows a cross-sectional view in a thickness direction illustrating an example of the welded member of the invention and an enlarged cross-sectional view of a resistance spot weld in the welded member and the periphery thereof.

As shown in Figs. 1 and 2, the present invention is a welded member having a resistance spot weld (hereinafter referred to as a "weld") formed by resistance-spot-welding a sheet set including two or more overlapping steel sheets.

As described later, at least one of the two or more overlapping steel sheets is a steel sheet having a softened layer in a steel sheet surface layer (see Fig. 4). No particular limitation is imposed on the number of overlapping steel sheets so long as the number is two or more. The number of steel sheets is preferably 3 or more. No particular limitation is imposed on the upper limit of the number of steel sheets, but the number is preferably 5 or less.

Fig. 2 shows an example of the welded member 10 including two overlapping steel sheets welded together. Both or one of the lower steel sheet 2 (lower sheet) and the upper steel sheet 1 (upper sheet) is the steel sheet having the softened layer described above. A weld 6 described later is formed at a steel sheet faying surface 7 at which the steel sheets 1 and 2 are in contact with each other.

In the welded member in the example shown in Fig. 2, only the lower sheet 2 is the steel sheet having the softened layer (not illustrated), and the upper sheet 1 is a steel sheet having no softened layer. In this case, the weld 6 in the invention is formed only on the faying surface 7 side of the lower sheet 2. When the upper and lower sheets 1 and 2 used are each the steel sheet having the softened layer in the invention, the weld 6 in the invention is formed on both the upper sheet 1 side and the lower sheet 2 side of the faying surface 7.

Although not illustrated, when three or more overlapping steel sheets are welded together, all or at least one of the lowermost steel sheet (i.e., the lower sheet), the uppermost steel sheet (i.e., the upper sheet), and a steel sheet (i.e., a middle sheet) disposed therebetween is the steel sheet having the softened layer. The weld in the invention is formed so as to include the faying surfaces between the steel sheets.

For example, in a sheet set including three steel sheets, the weld in the invention is formed so as to include two faying surfaces at which the lower and middle sheets and the middle and upper sheets are in contact with each other. When the three steel sheets used are each the steel sheet having the softened layer, the hardnesses of the softened layers in the steel sheet surface layers on the upper and lower sides of each faying surface are controlled.

<Weld>

The weld in the invention will be described in detail. The weld formed in a steel set including two overlapping steel sheets is similar to the weld formed in a steel set including three or more overlapping steel sheets, and therefore Fig. 2 will be used for the following description.

As shown in Fig. 2, in the weld 6 in the invention, the total thickness of the sheet set is denoted as $t_{all}$, and the

minimum thickness of the weld is denoted as $t_{weld}$. Then the total thickness ($t_{all}$) and the minimum thickness ($t_{weld}$) of the weld satisfy formula (1) shown below.

In a base metal zone 9 in the steel sheet having the softened layer, the nanoindentation hardness at a position spaced 20 $\mu$m from the surface of the softened layer in the thickness direction is denoted as Hbs, and the nanoindentation hardness at a position spaced 1/4 the thickness from the surface of the softened layer in the thickness direction is denoted as Hbt. Then, in addition to the condition described above, the nanoindentation hardnesses (Hbs and Hbt) at the above two positions satisfy the following formula (2).

$$0.5 < t_{weld} / t_{all} < 1.0 \qquad (1)$$

$$0.2 < Hbs / Hbt < 0.8 \qquad (2)$$

When the ratio ($t_{weld}/t_{all}$) of the minimum thickness to the total thickness does not satisfy formula (1) above, i.e., the ratio is less than or equal to the lower limit of formula (1), the reduction in the thickness of the weld 6 is significantly large. Therefore, the tensile residual stress generated in the weld 6 is excessively large, and LME cracking tends to occur. Moreover, this causes a reduction in the joint strength. The thickness of the sheet set is reduced by the pressurization by the pair of welding electrodes and the influence of heat during welding. Therefore, the upper limit of $t_{weld}/t_{all}$ is less than 1.0.

The lower limit of formula (1) is preferably 0.55 or more, and the upper limit of formula (1) is preferably 0.95 or less.

The "minimum thickness ($t_{weld}$) of the weld" is the minimum thickness in the thickness direction in a region extending in the width direction within a nugget 6a, as shown in Fig. 2. The minimum thickness ($t_{weld}$) can be measured by a method described later in Examples.

If the ratio (Hbs/Hbt) of the hardnesses in the base metal zone represented by formula (2) above is 0.8 or more, the tensile residual stress in the steel sheet surface layer is excessively large when the electrodes are released after the resistance spot welding, and, as a result, LME cracking tends to occur. If the ratio of the hardnesses in the base metal zone is 0.2 or less, a crack is easily formed in the steel sheet surface layer, and this causes a reduction in the joint strength.

Because of the reasons described above, it may be difficult to soften the surface layer in the weld heat affected zone described later (i.e., to control the hardness of the softened layer in the steel sheet surface layer in the weld heat affected zone within a prescribed range).

The lower limit of formula (2) is preferably 0.22 or more. The upper limit of formula (2) is preferably 0.75 or less.

With the structure described above, the strength of the weld can be ensured, and also the occurrence of LME cracking can be prevented.

In the present invention, from the viewpoint of more effectively improving the effect of ensuring the strength of the weld and the effect of preventing the occurrence of LME cracking, the following structure may be provided in addition to the structure described above.

As shown in Fig. 2, in a weld heat affected zone 6b in the steel sheet having the softened layer, a position that is located on the steel sheet faying surface 7 and is spaced 400 $\mu$m from an edge 6c of the nugget of the weld in a direction toward the base metal is defined as a starting point (i.e., point A shown in Fig. 2). The nanoindentation hardness at a position spaced 20 $\mu$m from the starting point in the thickness direction is denoted as Hws, and the nanoindentation hardness at a position spaced 1/4 the thickness from the starting point in the thickness direction is denoted as Hwt. Then it is effective that the nanoindentation hardnesses (Hws, Hwt, and Hbs) at these three positions satisfy the following formulas (3) and (4).

$$0.2 < Hws / Hwt < 1.0 \qquad (3)$$

$$0.8 < Hws / Hbs < 7.0 \qquad (4)$$

In formula (3) above, attention is given to the difference between the hardness in the steel sheet surface layer within the weld heat affected zone 6b (i.e., at the position spaced 20 $\mu$m from the starting point A in the thickness direction) and the hardness inside the steel sheet within the weld heat affected zone 6b (i.e., at the position spaced 1/4 the thickness from the starting point A in the thickness direction). If the ratio (Hws/Hwt) of the hardness in the weld heat affected zone 6b shown in formula (3) is less than 0.2, i.e., if the steel sheet surface layer in the weld heat affected zone 6b on the steel sheet faying surface 7 side on which stress concentration is large is significantly softened in comparison with the inside of the steel sheet in the weld heat affected zone 6b, the resistance to ductile cracking in the steel sheet surface layer in the weld heat affected zone decreases excessively. Therefore, the strength of the weld decreases.

If the hardness ratio (Hws/Hwt) is 1.0 or more, the steel sheet surface layer in the weld heat affected zone 6b is not softened relative to the inside of the steel sheet in the weld heat affected zone 6b. In this case, the effect of reducing the tensile residual stress in the weld is not obtained, and it is therefore difficult to prevent the occurrence of LME cracking. It is therefore effective that the relation 0.2 < Hws / Hwt < 1.0 is satisfied.

Preferably, the hardness ratio in the weld heat affected zone 6b satisfies the relation 0.25 < Hws / Hwt < 0.9. More preferably, the hardness ratio satisfies the relation 0.30 < Hws / Hwt < 0.8.

Moreover, in formula (4) above, attention is given to the difference between the steel sheet surface layer in the base metal zone and the steel sheet surface layer in the weld heat affected zone. In the steel sheet surface layer in the weld heat affected zone 6b, the microstructure changes due to the influence of heat during welding, and diffusion of alloying elements occurs, so that the hardness changes. Therefore, when the relation 0.8 < Hws / Hbs < 7.0 is satisfied, the hardness of the softened layer in the steel sheet surface layer in the weld heat affected zone (see Fig. 3) can be effectively controlled.

If the ratio (Hws/Hbs) of the hardnesses in the steel sheet surface layer shown in formula (4) is less than 0.8, the resistance to ductile cracking in the steel sheet surface layer in the weld heat affected zone decreases excessively, so that the strength of the weld decreases, as in the case of formula (1). If the hardness ratio (Hws/Hwt) is 7.0 or more, the hardness of the steel sheet surface layer in the weld heat affected zone is excessively high. The higher the hardness, the larger the tensile residual stress after the electrodes are released. In this case, the effect of reducing the tensile residual stress in the weld cannot be obtained.

It is preferable that the ratio of the hardnesses in the steel sheet surface layer satisfies the relation 1.0 < Hws / Hbs < 6.5, and it is more preferable that the ratio satisfies the relation 1.1 < Hws / Hbs < 6.0. When the hardness of the steel sheet surface layer in the weld heat affected zone is higher than the hardness of the steel sheet surface layer in the base metal zone, excessive strain concentration in the weld heat affected zone when a tensile load is applied to the weld can be prevented, and this is advantageous to avoid the occurrence of fracture in the weld heat affected zone.

The nanoindentation hardness (unit: GPa) can be measured by a nanoindentation hardness test as described later in Examples. No limitation is imposed on the nanoindentation hardness test in the invention. However, the hardness test may be performed using, for example, a nanoindentation apparatus (TI-950 TriboIndenter manufactured by Hysitron) according to ISO 14577.

<Steel sheets>

[Thickness, tensile strength]

The strength of the weld is influenced by the thicknesses of the overlapping steel sheets and their tensile strengths. Therefore, in the present invention, it is preferable that the ratio (Hws/Hwt) of the hardness of the steel sheet surface layer to the hardness of the inside of the steel sheet within the weld heat affected zone is appropriately controlled according to the thicknesses of the steel sheets and their tensile strengths. In this manner, the effects of the invention can be obtained more effectively.

Specifically, the thickness of a steel sheet is denoted as t (mm), and the tensile strength of the steel sheet is denoted as TS (MPa). Then it is preferable that the steel sheet having the softened layer satisfies the following formula (5).

$$-\{(1000 \times t / TS) - 0.25\} / 35 + 0.2 < (Hws / Hwt) < 1.0 \quad (5)$$

In formula (5), Hws is the nanoindentation hardness at the position spaced 20 $\mu$m from the starting point in the thickness direction, and Hwt is the nanoindentation hardness at the position space 1/4 the thickness from the starting point in the thickness direction.

From the viewpoint of controlling the hardness ratio (Hws/Hwt) more appropriately, it is more preferable that the following formula (6) is satisfied in addition to the above conditional expression (formula (5)).

$$0.25 \leq 1000 \times t / TS \leq 3.75 \quad (6)$$

If the thickness (t) of the steel sheet having the softened layer is large, the cross-sectional area of the weld heat affected zone is large. In this case, when a tensile load is applied to the weld, fracture tends to occur in the nugget rather than in the weld heat affected zone. Therefore, even when the surface layer in the weld heat affected zone is softened significantly, the strength of the weld is unlikely to decrease. Thus, the larger the thickness (t) of the steel sheet, the smaller the preferred lower limit of Hws/Hwt.

When the tensile strength (TS) of the steel sheet having the softened layer is large, martensitic transformation occurs due to the influence of heat during welding, so that the weld heat affected zone generally tends to be hardened. In this case, the difference in hardness between the softened layer in the steel sheet surface layer and the inside of the steel sheet is large, and this causes the surface layer in the weld heat affected zone to be softened, and therefore the strength of the weld tends to be lowered. Specifically, the higher the tensile strength (TS) of the steel sheet, the larger the preferred lower limit of Hws/Hwt.

Therefore, it is preferable, from the viewpoint of the thickness (t) of the steel sheet and its tensile strength (TS), that Hws/Hwt satisfies formula (5).

The lower limit of formula (5) is preferably more than or equal to -{(1000 $\times$ t / TS) - 0.25} / 35 + 0.3. The upper limit of formula (5) is preferably 0.9 or less.

For the reasons described above, it is more preferable that formula (6) is further satisfied. The lower limit of formula (6) is preferably 0.5 or more, and the upper limit of formula (6) is preferably 2.5 or less.

As described above, as the strength of the steel sheet increases and the amounts of alloying elements increase, the likelihood of the occurrence of LME cracking generally increases. Therefore, in the present invention, the tensile strength of the steel sheet having the softened layer is preferably TS $\geq$ 980 MPa. This is because, when the high strength steel sheet satisfies this relation, the effects of the invention can be obtained more effectively.

[Steel sheet having softened layer]

In the present invention, at least one of the two or more overlapping steel sheets is a steel sheet having a softened layer in a steel sheet surface layer as described above. Referring to Fig. 4, the steel sheet having the softened layer in the steel sheet surface layer will be described. Fig. 4 shows an example of the steel sheet having the softened layer in the steel sheet surface layer. Examples of the steel sheet having the softened layer include a galvanized steel sheet having a galvanized layer on the softened layer and a steel sheet having a Si internally oxidized layer as the outermost surface layer in the softened layer.

No particular limitation is imposed on the method for forming the softened layer in the steel sheet surface layer of the steel sheet used in the invention.

Fig. 4 shows, as an example, a steel sheet having a structure including a softened layer, a Si internally oxidized layer, a galvanized layer, and an Fe-based precoated layer described later.

[Galvanized steel sheet]

LME cracking is a phenomenon that occurs when tensile stress is applied to a steel sheet with molten zinc in contact with the steel sheet. Therefore, in the present invention, when a galvanized steel sheet is used, it is preferable that the softened layer is disposed in the steel sheet surface layer so as to be located at a surface in contact with the galvanized layer. This is because, with this galvanized steel sheet, the effects of the invention can be obtained more effectively. In particular, with consideration also given to the pressability and continuous spot-weldability of the steel sheets, the galvanized steel sheet is more preferably a hot-dip galvannealed steel sheet (GA steel sheet), a hot-dip galvanized steel sheet (GI steel sheet), or an electrogalvanized steel sheet (EG steel sheet).

As shown in Fig. 4, the galvanized steel sheet may include the Fe-based precoated layer between the softened layer and the galvanized layer. By forming the Fe-based precoated layer, which is a soft layer, the steel sheet surface layer can be further softened.

Preferably, the precoated layer is an Fe-based electroplated layer. Examples of the Fe-based electroplated layer that can be used include, in addition to pure iron, alloy coated layers such as an Fe-B alloy, an Fe-C alloy, an Fe-P alloy, an Fe-N alloy, an Fe-O alloy, an Fe-Ni alloy, an Fe-Mn alloy, an Fe-Mo alloy, and an Fe-W alloy. No particular limitation is imposed on the chemical composition of the Fe-based electroplated layer. However, in the present invention, it is preferable that the chemical composition contains one or two or more elements selected from the group consisting of B, C, P, N, O, Ni, Mn, Mo, Zn, W, Pb, Sn, Cr, V, and Co in a total amount of 10% by mass or less with the balance being Fe and incidental impurities. By setting the total amount of elements other than Fe to 10% by mass or less, a reduction in electrolysis efficiency is prevented, and the Fe-based electroplated layer can be formed at low cost.

The coating weight per side of the Fe-based electroplated layer is preferably 0.5 g/m$^2$ or more. The coating weight is more preferably 1.0 g/m$^2$ or more. No particular limitation is imposed on the upper limit of the coating weight per side of the Fe-based electroplated layer. From the viewpoint of cost, the coating weight per side of the Fe-based electroplated layer is preferably 60 g/m$^2$ or less. The coating weight is preferably 50 g/m$^2$ or less, more preferably 40 g/m$^2$ or less, and still more preferably 30 g/m$^2$ or less.

The thickness of the Fe-based electroplated layer is measured as follows. After the hot-dip galvanization, a 10 $\times$ 15 mm sample is cut from the high-strength hot-dip galvannealed steel sheet and embedded in a resin to prepare a cross-section-embedded sample. The cross section of the sample is observed at three randomly selected points using a scanning electron microscope (SEM) at an acceleration voltage of 15 kV at a magnification of 2000X to 10000X depending on the thickness of the Fe-based electroplated layer. The average value of the thicknesses in the three viewing fields is determined and multiplied by the specific gravity of iron to convert the thickness to the coating weight per side of the Fe-based electroplated layer.

It is preferable that the surface of an unannealed high strength cold rolled steel sheet is subjected to Fe-based electroplating treatment to obtain an unannealed Fe-based electroplated steel sheet. No particular limitation is imposed on the Fe-based electroplating treatment method. For example, the Fe-based electroplating bath used may be a sulfuric acid bath, a hydrochloric acid bath, or a mixture thereof. The unannealed high strength cold rolled steel sheet subjected to cold rolling may be subjected to the Fe-based electroplating treatment without oxidation treatment in, for example, a preheating furnace.

The content of Fe ions in the Fe-based electroplating bath before the start of energization is preferably 1.0 mol/L or more in terms of $Fe^{2+}$. When the content of Fe ions in the Fe-based electroplating bath is 1.0 mol/L or more in terms of $Fe^{2+}$, the coating weight of Fe is sufficient.

By using the steel sheet described above, the effects of the invention can be obtained more effectively. In particular, when a hot-dip galvannealed steel sheet subjected to pre-plating before the formation of the galvanized layer and then subjected to galvannealing treatment after the hot-dip galvanization is used, the effects of the invention are still more effective.

[Si internally oxidized layer]

For example, the steel sheet shown in Fig. 4 includes the Si internally oxidized layer within the softened layer. In this case, the Si internally oxidized layer can be formed as the outermost surface layer of the steel sheet by increasing the dew point during annealing when the steel sheet is produced, and the behavior of the other alloying elements during the formation of the Si internally oxidized layer is also controlled. In this manner, the softened layer can be formed. By using this steel sheet, the effects of the invention can be obtained more effectively.

Specifically, the "Si internally oxidized layer" is a region in which the Si oxide is formed in crystal grains and/or part of crystal grain boundaries.

<Welding points in welded member>

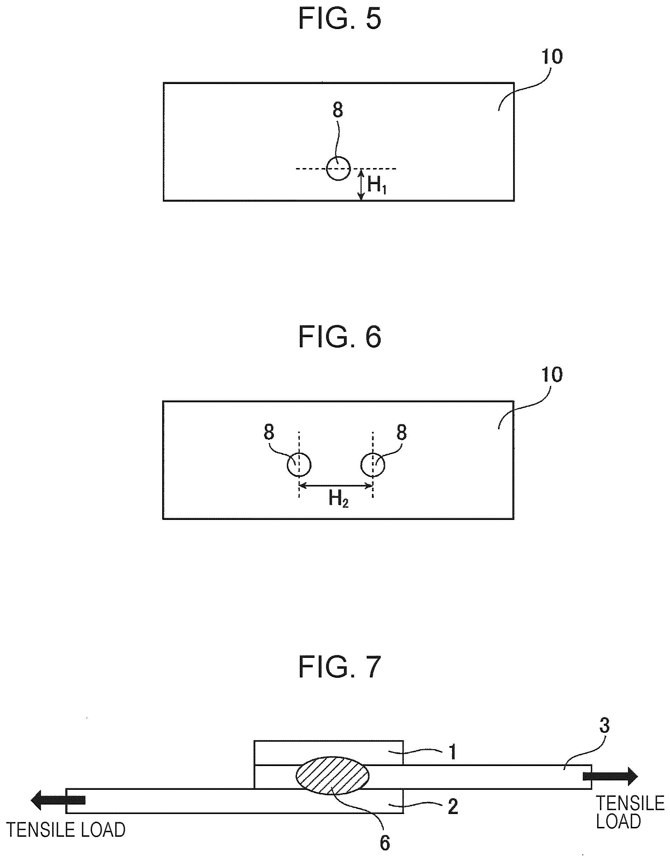

Welding points in the welded member will be described using Figs. 5 and 6. Figs. 5 and 6 are top views showing the vicinities of the welds of the welded members (illustrations of the welded members as viewed from above).

As shown in Figs. 5 and 6, in the welded member 10 in the invention, the average of the shortest distances ($H_1$) from the centers of welding points of welds to an end face of the steel sheets is 3 mm or more. When a plurality of welding points are present, the average ($H_2$) of the center-to-center distances between adjacent welding points is preferably 6 mm or more.

The "average ($H_1$) of the shortest distances from the centers of the welding points of the welds to the end face of the steel sheets" is determined by specifying an end face of the steel sheets closest to the centers of the welding points and measuring the distances from the welding points to the end face, as shown in Fig. 5. When the number of welding points in the welded member is five or more, the average for five appropriately selected welding points is used as the "average shortest distance." When the number of welding points in the welded member is less than 5, the average for all the welding points is used as the "average shortest distance."

If the average shortest distance ($H_1$) is less than 3 mm, the sheets around the nuggets are insufficiently pressed on the steel sheet end face side, so that the molten metal easily splashes from the gap between the sheets toward the steel sheet end face. Therefore, splashes occur significantly during welding, and variations in nugget diameters are likely to increase, so that the strength of the welds becomes unstable. No limitation is imposed on the upper limit of the average shortest distance. To allow a welding gun having a general shape to be used for welding, the average shortest distance ($H_1$) is preferably 1000 mm or less.

As shown in Fig. 6, the "average ($H_2$) of the center-to-center distances between adjacent welding points" is determined by measuring the center-to-center distances between adjacent welding points. If the average ($H_2$) of the center-to-center distances between welding points is less than 6 mm, a diverted flow to an existing welding point occurs during welding, and the current density in the weld decreases. In this case, the nugget diameter tends to be small, and the strength of the weld tends to decrease. Moreover, the weld is restrained by the existing welding point, and the tensile residual stress increases, so that LME cracking tends to occur. No limitation is imposed on the upper limit of the average of the center-to-center distances between welding points. From the viewpoint of ensuring the strength and stiffness of the welded member, the average ($H_2$) of the center-to-center distances between welding points is preferably 100 mm or less.

Next, an embodiment of a method for producing the welded member of the invention will be described.

The welded member of the invention is produced through a production process including a preparation step of disposing two or more steel sheets so as to overlap each other to prepare a sheet set and a welding step of resistance-spot-welding the sheet set.

<Preparation step>

In this step, two or more steel sheets including at least one steel sheet having the softened layer described above are prepared. Then the two or more steel sheets are disposed so as to overlap each other to prepare a sheet set. For example, as shown in Fig. 1, the two overlapping steel sheets 1 and 2 are used to prepare a sheet set. The description of the steel sheets has already been provided and will be omitted. Next, the welding step is performed.

<Welding step>

The welding step includes an energization step and an electrode holding step described later. In the welding step, the sheet set prepared in the preparation step is joined together. In this step, as shown, for example, in Fig. 1, the sheet set is held between a pair of welding electrodes 4 and 5 disposed on the upper and lower sides of the sheet set and then energized under the application of pressure while the welding conditions are controlled to prescribed conditions. In this manner, the weld 6 in the invention described above is formed between the steel sheets 1 and 2 at the faying surface 7 between the steel sheets, and the steel sheets can thereby be joined together (see Fig. 2).

When a steel sheet having a softened layer and a steel sheet having no softened layer are used to prepare a sheet set, they are stacked such that the side with the softened layer is present at the faying surface between the steel sheets. When the steel sheet having the softened layer is a galvanized steel sheet (a GI steel sheet, a GA steel sheet, or an EG steel sheet) having a galvanized layer, the steel sheets are stacked such that the side with the softened layer is present at the faying surface between the steel sheets. There is, of course, no problem if the softened layer and/or the galvanized layer is present also at the steel sheet surface in contact with an electrode.

A welder usable for the resistance spot welding method in the present invention may be a welder that includes a pair of upper and lower electrodes and can perform welding while the welding pressure and the welding current are controlled freely. The present invention is applicable to both DC and AC welding power sources. When AC is used, the "current" means the "effective current." No particular limitation is imposed on the pressurizing mechanism (such as an air cylinder or a servo motor) of the welder, its type (e.g., a stationary or robot gun type), and the shape of the electrodes. Examples of the type of welding electrode tip include a DR type (dome radius type), an R type (radius type), and a D type (dome type) specified in JIS C 9304: 1999. The tip diameter of the welding electrodes is, for example, 4 mm to 16 mm.

Next, the welding conditions for the welding step in the invention will be described.

The welding step includes the energization step and the electrode holding step. In the welding step, the sheet set is held between the pair of welding electrodes to perform energization for joining under the application of pressure. In this case, one or two or more of states (a) to (e) described below are satisfied at at least one welding point immediately before the application of pressure by the welding electrodes. In the energization step, the energization is performed under the welding conditions of a welding pressure of 2.0 to 10.0 kN and a welding current of 4.0 to 15.0 kA for an energization time of 0.1 to 2.0 s. In the electrode holding step, the welding pressure holding time after completion of the energization is denoted as Th (s), and Th satisfies the relation of formula (7).

[Energization step]

[Welding pressure, welding current, and energization time]

If the welding pressure is less than 2.0 kN, the pressurization of the steel sheets is insufficient. In this case, splashes are likely to occur, and LME cracking tends to occur. If the welding pressure exceeds 10.0 kN, a special welding gun designed for applying high pressure is needed, and many restrictions are placed on the facility. Moreover, the reduction in thickness of the weld is significant. Therefore, LME cracking may occur, and a reduction in joint strength may occur. The welding pressure is preferably 3.0 kN or more and is preferably 7.0 kN or less.

If the welding current is less than 4.0 kA, the heat input is insufficient, and a sufficient nugget diameter cannot be obtained. If the welding current exceeds 15.0 kA, the heat input is excessively large, and splashes are likely to occur, so that LME cracking tends to occur. The welding current is preferably 5.0 kA or more and is preferably 12.0 kA or less.

If the energization time is shorter than 0.1 s, the diffusion of alloying elements in the weld heat affected zone may be insufficient, and the hardness of the softened layer in the weld heat affected zone may be almost unchanged relative to the hardness of the base metal. In the weld heat affected zone, topological strain concentration is larger than that in the base metal. Therefore, when the hardness of the softened layer in the weld heat affected zone is almost unchanged relative to the hardness of the base metal, strain concentration caused by the softening of the steel sheet surface layer in the weld heat affected zone is superimposed on the topological strain concentration, and this results in a reduction in TSS. If the energization time exceeds 2.0 s, the takt time in an automobile assembly process is long, and the productivity is low. The energization time is preferably 0.10 s or longer. The energization time is preferably 0.12 s or longer and is preferably 1.5 s or shorter.

The energization time is more preferably longer than or equal to $(0.13 \times \sqrt{(t_{all} \times H_{bs} / H_{bt})})$ s and still more preferably longer than or equal to $(0.19 \times \sqrt{(t_{all} \times H_{bs} / H_{bt})})$ s. This is because of the following reasons. As the total sheet thickness increases, the energization time required to obtain a sufficient nugget diameter increases. As the value of $H_{bs}/H_{bt}$, which is the ratio of the hardnesses in the base metal zone, increases, LME cracking is more likely to occur, so that the energization time necessary to facilitate alloying and discharge of Zn coating from a corona bond portion increases. The energization time is still more preferably 0.30 s or longer.

The resistance spot welding may be performed using multiple welding pressures, multiple current values, or in a specific pattern using a combination of energization and non-energization. For example, when multiple welding pressures are used for the energization, the minimum welding pressure during the energization is set to 2.0 kN or more, and the maximum welding pressure is set to 10.0 kN or less. When multiple current values are used for the energization, the minimum current value during the energization except for a non-energization period is set to 4.0 kA or more, and the maximum current value is set to 15.0 kA or less. The total energization time except for the non-energization period is set to 0.1 s or longer and 2.0 s or shorter.

[Welding work disturbances]

In the present invention, when, in addition to the above conditions, one or two or more of the following states (a) to (e) are satisfied at at least one welding point immediately before the application of pressure by the welding electrodes during the production of the welded member, the effects of the invention can be obtained more effectively.

(a) A state in which the inclination angle between the welding electrodes and the overlapping steel sheets is 0.2 degrees or more.
(b) A state in which the amount of offset between the pair of welding electrodes is 0.1 mm or more.
(c) A state in which a gap of 0.5 mm or more is present between one of the welding electrodes and the overlapping steel sheets.
(d) A state in which a gap of 0.5 mm or more is present between at least one pair of steel sheets among the overlapping steel sheets.
(e) A state in which the shortest distance from the center of the welding point to a steel sheet end face of the overlapping steel sheets is 10 mm or less.

These welding work disturbances each cause the temperature of the weld and/or the tensile stress when the electrodes are released to increase locally. In the resulting state, LME cracking is more likely to occur. However, in the present invention, the surface layer of the weld is controlled. Therefore, even in the presence of these welding work disturbances, LME cracking can be prevented, and tolerances for work disturbance management during the production of the member are improved. The details of the work disturbances will next be described.

(a) The state in which the inclination angle between the welding electrodes and the overlapping steel sheets is 0.2 degrees or more.
The inclination angle means the angle of inclination of the electrodes with respect to the steel sheets, i.e., the "angle between the direction of the welding pressure from the electrodes and the thickness direction of the steel sheets." When the inclination angle is large, bending stress is applied to the weld, and large compressive plastic deformation occurs locally. In this case, the tensile stress after the electrodes are released is large. The effects of the invention can be obtained effectively when the inclination angle is 0.2 degrees or more. If the inclination angle is excessively large, the formation of the nugget is unstable, and this causes splashes to occur. Therefore, the inclination angle is preferably 10 degrees or less. The inclination angle is more preferably 1 degree or more and is more preferably 8 degrees or less.
(b) The state in which the amount of offset between the pair of welding electrodes is 0.1 mm or more.
The offset means the state in which the center axes of the pair of welding electrodes are not aligned with each other. If the offset amount is large, bending stress is applied to the weld, and LME cracking is more likely to occur, as in the case of the inclination angle described above. The effects of the invention can be obtained effectively when the offset amount is 0.1 mm or more. If the offset amount is excessively large, the formation of the nugget is unstable, and this causes splashes to occur. Therefore, the offset amount is preferably 5 mm or less. The offset amount is more preferably 0.2 mm or more and is more preferably 3 mm or less.
(c) The state in which a gap of 0.5 mm or more is present between one of the welding electrodes and the overlapping steel sheets.
When a gap is present between one of the welding electrodes and the steel sheets immediately before the start of the application of pressure, e.g., when one of the welding electrodes is movable (hereinafter referred to as a movable electrode) and the other welding electrode is fixed (hereinafter referred to as a fixed electrode) with a gap present between the fixed electrode and the steel sheets, the movable electrode is used to start the application of pressure. In this case, the steel sheets are bent, and therefore bending stress is applied to the weld, so that LME cracking tends to occur. The effects of the invention can be obtained effectively when the gap width is 0.5 mm or more. If the gap width is excessively large, the formation of the nugget is unstable, and this causes splashes to occur. Therefore, the gap width is preferably 5 mm or less. The gap width is more preferably 1 mm or more and is more preferably 3 mm or less.

(d) The state in which a gap of 0.5 mm or more is present between at least one pair of steel sheets among the overlapping steel sheets.

When a gap is present between steel sheets immediately before the application of the pressure, bending deformation occurs in the steel sheets, and bending stress is applied to the weld, so that LME cracking tends to occur, as in the case of (c) described above. The effects of the invention can be obtained effectively when the gap width is 0.5 mm or more. If the gap width is excessively large, the formation of the nugget is unstable, and this causes splashes to occur. Therefore, the gap width is preferably 4 mm or less. The gap width is more preferably 1 mm or more and is more preferably 3 mm or less. The phrase "a gap is present between at least one pair of steel sheets" means as follows. In two or more overlapping steel sheets, two steel sheets disposed in the vertical direction are defined as a pair of steel sheets. The above phrase means that a gap is present between at least one pair of steel sheets.

(e) The state in which the shortest distance from the center of the welding point to the steel sheet end face of the overlapping steel sheets is 10 mm or less.

If the shortest distance from the center of the welding point to the steel sheet end face is small, the cooling rate of the weld decreases because heat conduction from the weld is inhibited at the steel sheet end face. In this case, the temperature when the electrodes are released is high, and LME cracking tends to occur. The effects of the invention can be obtained effectively when the shortest distance from the center of the welding point to the steel sheet end face is 10 mm or less. As described above, if the shortest distance is less than 3 mm, the occurrence of splashes during welding is significant. In this case, variations in nugget diameter tend to be large, and the strength of the welds is unstable. Therefore, the shortest distance is preferably 3 mm or more. The shortest distance is preferably 4 mm or more and is more preferably 8 mm or less.

[Electrode holding step]

After the energization step described above, the electrode holding step is performed. The electrode holding step is the step of holding the welding electrodes at a certain welding pressure after completion of the energization to prevent the occurrence of blowholes.

In the electrode holding step, the welding pressure holding time after completion of the energization is denoted as Th (s). Then, from the viewpoint of controlling the temperature after the electrodes are released, the welding pressure holding time (Th (s)) satisfies the relation of formula (7) below. In this case, the effects of the invention can be obtained effectively.

$$\{(Hbs / Hbt) - 0.2\} / 30 < Th < [-\{(Hbs / Hbt) - 0.2\} / 3] + 1.2 \ (7) \tag{7}$$

In formula (7), Hbs is the nanoindentation hardness at the position spaced 20 $\mu$m from the surface of the softened layer in the base metal zone in the thickness direction, and Hbt is the nanoindentation hardness at the position spaced 1/4 the thickness from the surface of the softened layer in the thickness direction.

From the viewpoint of controlling the temperature more appropriately, it is more preferable to satisfy the following formula (8) in addition to the above conditional expression ((formula) 7).

$$0 < Th \tag{8}$$

If the welding pressure holding time (Th) is excessively short, the temperature after the electrodes are released increases, and LME cracking tends to occur. If the welding pressure holding time (Th) is excessively long, the takt time per welding point is long, and the productivity decreases. Moreover, since the cooling rate of the weld increases, the microstructure of the weld is embrittled. In this case, the joint strength decreases, and the weld tends to undergo delayed fracture. In particular, the larger the hardness ratio (Hbs/Hbt) in the base metal zone (i.e., the smaller the degree of softening of the steel sheet surface layer relative to that inside the steel sheet in the base metal zone), the smaller the effect of preventing LME cracking by the softened layer in the steel sheet surface layer. It is therefore necessary that the lower limit of the welding pressure holding time (Th) be set to a large value. Moreover, the larger the Hbs/Hbt, the more likely the microstructure of the steel sheet surface layer in the weld is to be embrittled. It is therefore necessary that the upper limit of the Th be set to a small value.

For the reasons described above, the welding pressure holding time is the time satisfying formula (7). The lower limit of formula (7) is preferably longer than or equal to {(Hbs / Hbt) - 0.2} / 30 + 0.02. The upper limit of formula (7) is preferably shorter than or equal to [-{(Hbs / Hbt) - 0.2} / 3] + 1.0.

For the reasons described above, it is more preferable that formula (8) is further satisfied. The lower limit of formula (8) is more preferably 0.02 or longer and still more preferably 0.17 or longer. The upper limit of formula (8) is more preferably 1.0 or shorter.

EXAMPLES

The operations and effects of the present invention will be described by way of Examples. However, the present invention is not limited to the following Examples.

Sheet sets shown in Table 1 were used to produce welded joints (welded members) under welding conditions shown in Table 2. In each sheet set, a steel sheet 1, a steel sheet 2, and a steel sheet 3 shown in Table 1 were sequentially disposed from the upper side so as to overlap each other. "None" in the coating columns in Table 1 means a steel sheet (cold-rolled steel sheet) having no coated layer. "Yes" in "Softened layer in steel sheet surface layer" means the state in which a softened layer is present in a steel sheet surface layer, and "Yes" in "Internally oxidized layer" means the state in which a Si internally oxidized layer is present in a steel sheet surface layer, as shown in Fig. 4. Moreover, "Yes" in "Fe-based precoating" means the state in which a Fe-based precoating is present on a steel sheet surface layer, as shown in Fig. 4. Each symbol shown in the "State immediately before pressurization" column corresponds to one of (a) to (e) shown in the welding work disturbances described above. The welder used was a servo motor pressing-type single-phase AC (50 Hz) resistance welder attached to a welding gun. The pair of electrode tips used were chromium-copper DR-type electrodes having a tip curvature radius R of 40 mm and a tip diameter of 6 mm.

In the "Tensile strength" columns in Table 1, the tensile strength (MPa) measured as follows is shown. A JIS No. 5 test piece for a tensile test was cut from one of the steel sheets in the rolling direction, and the tensile test was performed according to JIS Z 2241 to measure the tensile strength.

The TSS of each welded joint and the presence or absence of LME cracking were evaluated by methods described below. Methods described below were used to measure the thicknesses ($t_{all}$ and $t_{weld}$) in each welded joint and the nanoindentation hardnesses (Hbs, Hbt, Hws, and Hwt) at different positions.

[Measurement of thicknesses]

One of the produced welded joints was cut using a micro-cutter along a plane passing through the center of the weld, and a cross section in the thickness direction was observed. The total thickness ($t_{all}$) of the sheet set was determined by measuring the thicknesses of the steel sheets before welding and summing the thicknesses to compute the total thickness. The minimum thickness ($t_{weld}$) of the weld was determined by measuring the lengths in the thickness direction in a region extending in the width direction within the nugget at 100 μm intervals and determining the minimum value used as the "minimum thickness" (see Fig. 2). The obtained values were used to determine the value of "$t_{weld}/t_{all}$."

[Measurement of nanoindentation hardnesses]

One of the produced welded joints was cut using a micro-cutter along a plane passing through the center of the weld, and a nanoindentation hardness test was performed in the weld heat affected zone and in the base metal zone. In the nanoindentation hardness test, a triangular pyramidshaped diamond indenter was pressed into a measurement position with a pressing load of 500 μN to obtain a loaddisplacement curve from the start of the application of the load to the completion of unloading, and then the hardness was determined using the Oliver-Pharr analysis method.

The nanoindentation hardnesses in the base metal zone were measured as follows. Specifically, as shown in Fig. 2, in the base metal zone in the steel sheet having the softened layer (the lower sheet 2 shown in Fig. 2), the nanoindentation hardness (Hbs) at the position spaced 20 μm from the surface of the softened layer in the thickness direction was measured, and the nanoindentation hardness (Hbt) at the position spaced 1/4 the thickness from the surface of the softened layer in the thickness direction was measured. The measurement positions in the base metal zone were positions spaced 500 0 μm from the intersection of the outer edge of the weld heat affected zone and the faying surface 7 between the steel sheets in the direction toward the base metal.

The nanoindentation hardnesses in the weld heat affected zone were measured as follows. Specifically, as shown in Fig. 2, in the steel sheet having the softened layer (the lower sheet 2 shown in Fig. 2), the position located on the steel sheet faying surface and spaced 400 μm from the edge of the nugget in the direction toward the base metal is defined as the starting point A. The nanoindentation hardness (Hws) at the position spaced 20 μm from the starting point A in the thickness direction was measured, and the nanoindentation hardness (Hwt) at the position spaced 1/4 the thickness from the starting point A in the thickness direction was measured.

The values obtained were used to determine the values of "Hbs/Hbt," "Hws/Hwt," and "Hws/Hbs" indicating the hardness ratios in the welded joint. The values of "Hbs/Hbt," "Hws/Hwt," and "Hws/Hbs" of each steel sheet shown in the "Evaluation steel sheet" column in Table 2 were used as representative values and shown in Table 2.

[Evaluation of TSS]

The tensile shear strength (TSS) was evaluated based on a tensile shear test method (JIS Z 3136). In the shear tensile test, shear tensile test pieces were cut from the steel sheets shown in Table 1, and sheet sets shown in Table 1 were resistance-spot-welded under welding conditions shown in Table 3 to produce welded joints (test specimens) used for the test.

To make comparisons with the obtained test specimens (the welded joints produced by the welding method of the invention), comparative joints in which the properties of the surface layer in the steel sheet were not controlled (i.e., welded joints in which the hardness difference in the welded joints was Hbs/Hbt ≈ 1.0) were also produced. The TSS of each comparative joint was also evaluated using the same tensile shear test method.

In the welded joint of condition No. 4 (sheet set No. D) shown in Table 3, all the overlapping steel sheets did not have the softened layer, and the evaluation of the TSS was not performed.

Each test specimen for the TSS evaluation had a shape specified in JIS Z 3136. In sheet sets including three overlapping sheets (such as sheet set No. H in Table 1), the evaluation was performed such that a tensile load was applied to the steel sheet 2 and the steel sheet 3 as shown in Fig. 7.

To produce the welded joints for TSS evaluation, only one welding point was used, and welding work disturbances such as the inclination angle and the sheet gap shown in Tables 2 and 3 were not provided.

The TSS was evaluated according to the following criteria.

<Evaluation criteria>

A: (the TSS of the welded joint produced by the welding method of the invention / the TSS of the comparative joint) ≥ 0.9
B: 0.9 > (the TSS of the welded joint produced by the welding method of the invention / the TSS of the comparative joint) ≥ 0.8
F: 0.8 > (the TSS of the welded joint produced by the welding method of the invention / the TSS of the comparative joint)

When the rating was A or B, the test specimen was rated pass (had good shear tensile strength).

[Evaluation of LME cracking]

Welding was performed in a state with one or two or more of the welding work disturbances (a) to (e) described above. The obtained welded joint was cut using a micro-cutter along a plane passing through the center of the weld, and then a cross section of the weld in the thickness direction was observed. From the results of the observation, the presence or absence of LME cracking was evaluated according to criteria shown below. Specifically, 10 welded joints were produced under welding conditions shown in Table 3, and a cross-section of the steel sheets was observed on the steel sheet faying surface side to check LME cracking. The weld in each steel sheet shown in the "Evaluation steel sheet" column in Table 2 was used for the cross-sectional observation on the steel sheet faying surface side and evaluated.

<Evaluation criteria>

A: No cracking was found in all the ten welded joints.
B: The number of cracked welded joints was 2 or less, and the maximum cracking depth was less than 100 μm.
F: The number of cracked welded joints was 3 or more, or the maximum cracking depth was 100 μm or more.

When the rating was A or B, the welded joints were rated pass.
The values obtained and the evaluation results are shown in Tables 2 and 3.

[Table 1]

| Sheet set No. | Steel sheet 1 | | | | | | Steel sheet 2 | | | | | | Steel sheet 3 | | | | | |
|---|---|---|---|---|---|---|---|---|---|---|---|---|---|---|---|---|---|---|
| | Sheet thickness (mm) | Tensile strength (MPa) | Softened layer in steel sheet surface layer | Internally oxidized layer | Zinc coating *1 | Fe-based precoating | Sheet thickness (mm) | Tensile strength (MPa) | Softened layer in steel sheet surface layer | Internally oxidized layer | Zinc coating *1 | Fe-based precoating | Sheet thickness (mm) | Tensile strength (MPa) | Softened layer in steel sheet surface layer | Internally oxidized layer | Zinc coating *1 | Fe-based precoating |
| A | 1.6 | 980 | Yes | Yes | GA | None | 1.6 | 980 | Yes | Yes | GA | None | | | | | | |
| B | 1.2 | 1180 | Yes | Yes | GA | Yes | 1.2 | 1180 | Yes | Yes | GA | Yes | | | | | | |
| C | 2.0 | 1470 | Yes | Yes | GA | None | 2.0 | 1470 | Yes | Yes | GA | None | | | | | | |
| D | 1.6 | 980 | **None** | | GA | None | 1.6 | 980 | **None** | | GA | None | | | | | | |
| E | 1.6 | 2000 | Yes | Yes | GA | None | 1.6 | 2000 | Yes | Yes | GA | None | | | | | | |
| F | 1.6 | 1180 | Yes | Yes | GA | None | 1.6 | 1470 | Yes | Yes | GA | None | | | | | | |
| G | 1.0 | 1470 | Yes | Yes | GA | None | 1.0 | 1470 | Yes | Yes | None | None | | | | | | |
| H | 0.7 | 270 | **None** | | GA | None | 1.4 | 980 | **None** | | GA | None | 1.6 | 1180 | Yes | Yes | GA | None |
| I | 1.6 | 980 | **None** | | GA | None | 1.2 | 780 | Yes | None | GA | None | | | | | | |
| J | 1.6 | 1470 | Yes | Yes | GI | None | 1.6 | 980 | Yes | Yes | GI | None | | | | | | |
| K | 1.6 | 1470 | Yes | Yes | EG | None | 1.6 | 980 | Yes | Yes | EG | None | | | | | | |
| L | 1.2 | 1850 | Yes | Yes | GA | Yes | 1.0 | 980 | **None** | | None | None | | | | | | |
| M | 1.0 | 980 | Yes | Yes | GA | Yes | 1.0 | 980 | Yes | Yes | GA | Yes | | | | | | |
| N | 1.0 | 980 | Yes | Yes | GA | None | 1.0 | 980 | Yes | Yes | GA | None | | | | | | |
| O | 0.6 | 270 | **None** | | GA | None | 2.0 | 980 | **None** | | GA | None | 2.0 | 1470 | Yes | Yes | GA | None |
| P | 1.2 | 590 | **None** | | GA | None | 2.0 | 980 | **None** | | GA | None | 2.0 | 1180 | Yes | Yes | None | None |
| Q | 2.0 | 980 | **None** | | GA | None | 2.0 | 980 | **None** | | GA | None | 2.0 | 1850 | Yes | Yes | GA | Yes |

*1. GA: Hot-dip galvannealing, GI: Hot-dip galvanizing, EG: Electrogalvanizing

[Table 2]

| Condition No. | Sheet set No. | $t_{weld}/t_{all}$ | Properties of weld | | | | | | | | | Average shortest distance (mm) | Average of center-to-center distances between welding points (mm) | Number of welding points | Remarks |
|---|---|---|---|---|---|---|---|---|---|---|---|---|---|---|---|
| | | | Evaluation steel sheet | Sheet thickness t (mm) | Tensile strength TS (MPa) | Hbs/Hbt | Hws/Hwt | Hws/Hbs | (1000×t)/TS | Lower limit of formula (5) | Suitability of formula (5) | | | | |
| 1 | A | 0.93 | Steel sheet 2 | 1.6 | 980 | 0.6 | 0.8 | 2.0 | 1.63 | 0.16 | ○ | 15 | - | 1 | Inventive Example |
| 2 | B | 0.80 | Steel sheet 2 | 1.2 | 1180 | 0.25 | 0.3 | 1.1 | 1.02 | 0.18 | ○ | 15 | 7 | 2 | Inventive Example |
| 3 | C | 0.70 | Steel sheet 1 | 2.0 | 1470 | 0.4 | 0.5 | 1.6 | 1.36 | 0.17 | ○ | 4 | - | 1 | Inventive Example |
| 4 | D | 0.40 | Steel sheet 1 | 1.6 | 980 | 1.0 | 1.1 | 1.3 | 1.63 | 0.16 | × | 2 | 5 | 2 | Comparative Example |
| 5 | E | 0.80 | Steel sheet 2 | 1.6 | 2000 | 0.15 | 0.17 | 2.0 | 0.80 | 0.18 | × | 15 | - | 1 | Comparative Example |
| 6 | F | 0.60 | Steel sheet 2 | 1.6 | 1470 | 0.9 | 0.95 | 7.5 | 1.09 | 0.18 | ○ | 15 | - | 1 | Comparative Example |
| 7 | G | 0.90 | Steel sheet 1 | 1.0 | 1470 | 0.22 | 0.18 | 1.1 | 0.68 | 0.19 | × | 20 | 30 | 2 | Inventive Example |
| 8 | H | 0.92 | Steel sheet 3 | 1.6 | 1180 | 0.25 | 0.3 | 1.1 | 1.36 | 0.17 | ○ | 40 | 15 | 3 | Inventive Example |
| 9 | I | 0.87 | Steel sheet 2 | 1.2 | 780 | 0.75 | 1.1 | 2.0 | 1.54 | 0.16 | × | 6 | - | 1 | Inventive Example |
| 10 | J | 0.90 | Steel sheet 1 | 1.6 | 1470 | 0.6 | 0.8 | 2.0 | 1.09 | 0.18 | ○ | 10 | - | 1 | Inventive Example |
| 11 | K | 0.95 | Steel sheet 1 | 1.6 | 1470 | 0.6 | 0.8 | 2.0 | 1.09 | 0.18 | ○ | 15 | - | 1 | Inventive Example |
| 12 | L | 0.80 | Steel sheet 1 | 1.2 | 1850 | 0.7 | 0.9 | 6.5 | 0.65 | 0.19 | ○ | 15 | - | 1 | Inventive Example |
| 13 | M | 0.75 | Steel sheet 1 | 1.0 | 980 | 0.6 | 0.5 | 0.9 | 1.02 | 0.18 | ○ | 15 | - | 1 | Inventive Example |

| Con-dition No. | Sheet set No. | $t_{weld}/t_{all}$ | Properties of weld | | | | | | | | | Average shortest distance (mm) | Average of center-to-center distances between welding points (mm) | Number of welding points | Remarks |
|---|---|---|---|---|---|---|---|---|---|---|---|---|---|---|---|
| | | | Evaluation steel sheet | Sheet thickness t (mm) | Tensile strength TS (MPa) | Hbs/Hbt | Hws/Hwt | Hws/Hbs | (1000×t)/TS | Lower limit of formula (5) | Suitability of formula (5) | | | | |
| 14 | N | 0.80 | Steel sheet 1 | 1.0 | 980 | 0.7 | 0.9 | 0.7 | 1.02 | 0.18 | ○ | 15 | - | 1 | Inventive Example |
| 15 | A | 0.90 | Steel sheet 2 | 1.6 | 980 | 0.6 | 0.85 | 2.5 | 1.63 | 0.16 | ○ | 15 | - | 1 | Inventive Example |
| 16 | B | 0.78 | Steel sheet 2 | 1.2 | 1180 | 0.25 | 0.4 | 1.3 | 1.02 | 0.18 | ○ | 15 | 7 | 2 | Inventive Example |
| 17 | C | 0.65 | Steel sheet 1 | 2.0 | 1470 | 0.4 | 0.6 | 2.0 | 1.36 | 0.17 | ○ | 4 | - | 1 | Inventive Example |
| 18 | H | 0.80 | Steel sheet 3 | 1.6 | 1180 | 0.25 | 0.4 | 2.0 | 1.36 | 0.17 | ○ | 40 | 15 | 3 | Inventive Example |
| 19 | J | 0.80 | Steel sheet 1 | 1.6 | 1470 | 0.6 | 0.85 | 2.5 | 1.09 | 0.18 | ○ | 10 | - | 1 | Inventive Example |
| 20 | K | 0.80 | Steel sheet 1 | 1.6 | 1470 | 0.6 | 0.85 | 2.4 | 1.09 | 0.18 | ○ | 15 | - | 1 | Inventive Example |
| 21 | L | 0.70 | Steel sheet 1 | 1.2 | 1850 | 0.7 | 0.9 | 6.8 | 0.65 | 0.19 | ○ | 15 | - | 1 | Inventive Example |
| 22 | M | 0.65 | Steel sheet 1 | 1.0 | 980 | 0.6 | 0.6 | 1.2 | 1.02 | 0.18 | ○ | 15 | - | 1 | Inventive Example |
| 23 | O | 0.80 | Steel sheet 3 | 2 | 1470 | 0.4 | 0.7 | 1.8 | 1.36 | 0.17 | ○ | 15 | - | 1 | Inventive Example |
| 24 | P | 0.85 | Steel sheet 3 | 2 | 1180 | 0.5 | 0.8 | 2.0 | 1.69 | 0.16 | ○ | 15 | - | 1 | Inventive Example |
| 25 | Q | 0.75 | Steel sheet 3 | 2 | 1850 | 0.6 | 0.8 | 3.0 | 1.08 | 0.18 | ○ | 15 | - | 1 | Inventive Example |

*1:

$$-\{(1000 \times t / TS) - 0.25\} / 35 + 0.2 < (Hws / Hwt) < 1.0 \qquad (5)$$

[Table 3]

| Condition No. | Sheet set No. | Welding step | | | | | | | | | | Results | | Remarks |
|---|---|---|---|---|---|---|---|---|---|---|---|---|---|---|
| | | Energization step | | | | | Electrode holding step | | | | | | | |
| | | State immediately before pressurization | | Welding pressure (kN) | Welding current (kA) | Energization time (s) | Welding pressure holding time Th (s) | Lower limit of formula (7) | Upper limit of formula (7) | Suitability of formula (7) | | TSS | LME | |
| 1 | A | (a) (c) | Inclination angle: 5 degrees Gap between electrode and sheet: 2 mm | 4.5 | 6.0 | 0.30 | 0.200 | 0.013 | 1.067 | ○ | | A | A | Inventive Example |
| 2 | B | (a) (c) | Inclination angle: 5 degrees Gap between electrode and sheet: 2 mm | 3.5 | 7.0 | 0.25 | 0.100 | 0.002 | 1.183 | ○ | | A | A | Inventive Example |
| 3 | C | (e) | Shortest distance to end face of steel sheets: 4 mm | 5.0 | 7.2 | 0.34 | 0.300 | 0.007 | 1.133 | ○ | | A | A | Inventive Example |
| 4 | D | (a) (e) | Inclination angle: 5 degrees Shortest distance to end face of steel sheets: 2 mm | 4.5 | 6.0 | 0.30 | 0.020 | 0.027 | 0.933 | × | | - | F | Comparative Example |
| 5 | E | (a) (c) | Inclination angle: 5 degrees Gap between electrode and sheet: 2 mm | 4.5 | 9.0 | 0.08 | 0.200 | -0.002 | 1.217 | ○ | | F | A | Comparative Example |

EP 4 563 272 A1

| Condition No. | Sheet set No. | Welding step | | | | | | | | | | Results | | Remarks |
|---|---|---|---|---|---|---|---|---|---|---|---|---|---|---|
| | | Energization step | | | | | Electrode holding step | | | | | TSS | LME | |
| | | State immediately before pressurization | | Welding pressure (kN) | Welding current (kA) | Energization time (s) | Welding pressure holding time Th (s) | Lower limit of formula (7) | Upper limit of formula (7) | Suitability of formula (7) | | | | |
| 6 | F | (a) (c) | Inclination angle: 5 degrees Gap between electrode and sheet: 2 mm | 4.5 | 11.0 | 0.33 | 0.020 | 0.023 | 0.967 | × | | A | F | Comparative Example |
| 7 | G | (b) | Offset amount: 1 mm | 5.5 | 8.0 | 0.32 | 0.200 | 0.001 | 1.193 | ○ | | B | A | Inventive Example |
| 8 | H | (d) | Gap between sheets: 2 mm | 4.0 | 7.0 | 0.40 | 0.200 | 0.002 | 1.183 | ○ | | A | A | Inventive Example |
| 9 | I | (a) (c) | Inclination angle: 5 degrees Gap between electrode and sheet: 2 mm | 4.0 | 7.0 | 1.00 | 0.020 | 0.018 | 1.017 | ○ | | A | B | Inventive Example |
| 10 | J | (a) | Inclination angle: 7 degrees | 4.5 | 6.0 | 0.30 | 0.200 | 0.013 | 1.067 | ○ | | A | A | Inventive Example |
| 11 | K | (a) | Inclination angle: 3 degrees | 4.5 | 6.0 | 0.30 | 0.200 | 0.013 | 1.067 | ○ | | A | A | Inventive Example |
| 12 | L | (a) | Inclination angle: 7 degrees | 5.0 | 7.0 | 0.20 | 0.250 | 0.017 | 1.033 | ○ | | A | A | Inventive Example |
| 13 | M | (d) | Gap between sheets: 1 mm | 4.0 | 8.0 | 0.18 | 0.100 | 0.013 | 1.067 | ○ | | A | A | Inventive Example |
| 14 | N | (a) | Inclination angle: 3 degrees | 4.0 | 7.0 | 0.12 | 0.900 | 0.017 | 1.033 | ○ | | B | A | Inventive Example |

| Condition No. | Sheet set No. | Welding step | | | | | | | | | Results | | Remarks |
|---|---|---|---|---|---|---|---|---|---|---|---|---|---|
| | | Energization step | | | | | Electrode holding step | | | | TSS | LME | |
| | | State immediately before pressurization | | Welding pressure (kN) | Welding current (kA) | Energization time (s) | Welding pressure holding time Th (s) | Lower limit of formula (7) | Upper limit of formula (7) | Suitability of formula (7) | | | |
| 15 | A | (a) (c) | Inclination angle: 5 degrees Gap between electrode and sheet: 2 mm | 4.5 | 6.0 | 0.40 | 0.200 | 0.013 | 1.067 | ○ | A | A | Inventive Example |
| 16 | B | (a) (c) | Inclination angle: 5 degrees Gap between electrode and sheet: 2 mm | 3.5 | 7.0 | 0.32 | 0.500 | 0.002 | 1.183 | ○ | A | A | Inventive Example |
| 17 | C | (e) | Shortest distance to end face of steel sheets: 4 mm | 5.0 | 7.2 | 0.34 | 0.300 | 0.007 | 1.133 | ○ | A | A | Inventive Example |
| 18 | H | (d) | Gap between sheets: 2 mm | 4.0 | 7.0 | 0.40 | 0.800 | 0.002 | 1.183 | ○ | A | A | Inventive Example |
| 19 | J | (a) | Inclination angle: 7 degrees | 4.5 | 6.0 | 0.60 | 0.200 | 0.013 | 1.067 | ○ | A | A | Inventive Example |
| 20 | K | (a) | Inclination angle: 3 degrees | 4.5 | 6.0 | 0.50 | 0.200 | 0.013 | 1.067 | ○ | A | A | Inventive Example |
| 21 | L | (a) | Inclination angle: 7 degrees | 5.0 | 7.0 | 0.40 | 0.250 | 0.017 | 1.033 | ○ | A | A | Inventive Example |
| 22 | M | (d) | Gap between sheets: 1 mm | 4.0 | 8.0 | 0.32 | 0.140 | 0.013 | 1.067 | ○ | A | A | Inventive Example |
| 23 | O | (a) | Inclination angle: 5 degrees | 5.0 | 8.0 | 0.50 | 0.400 | 0.007 | 1.133 | ○ | A | A | Inventive Example |
| 24 | P | (a) | Inclination angle: 5 degrees | 6.0 | 8.5 | 0.60 | 0.200 | 0.010 | 1.100 | ○ | A | A | Inventive Example |

(continued)

| Condition No. | Sheet set No. | Welding step | | | | | | | | Results | | Remarks |
|---|---|---|---|---|---|---|---|---|---|---|---|---|
| | | Energization step | | | | Welding pressure holding time Th (s) | Electrode holding step | | | TSS | LME | |
| | | State immediately before pressurization | Welding pressure (kN) | Welding current (kA) | Energization time (s) | | Lower limit of formula (7) | Upper limit of formula (7) | Suitability of formula (7) | | | |
| | | (a) Inclination angle: 5 degrees | | | | | | | | | | |
| 25 | Q | Inclination angle: 5 degrees | 4.0 | 7.0 | 0.55 | 0.300 | 0.013 | 1.067 | ○ | A | A | Inventive Example |

*1: $\{(Hbs / Hbt) - 0.2\} / 30 < Th < [-\{(Hbs / Hbt) - 0.2\} / 3] + 1.2$ (7)

As is clear from Table 3, the evaluation results for the welded joints (welded members) in Inventive Examples were all A or B. According to the present invention, the strength of the weld can be ensured, and also the occurrence of LME cracking can be prevented.

Reference Signs List

1, 2, 3 steel sheet
4, 5 welding electrode
6 weld
6a nugget
6b weld heat affected zone
6c nugget edge
7 steel sheet faying surface
8 welding point
9 base metal zone
10 welded member

**Claims**

1. A welded member having a resistance spot weld formed by resistance-spot-welding a sheet set including two or more overlapping steel sheets,

   wherein a total thickness of the sheet set is denoted as $t_{all}$, wherein a minimum thickness of the resistance spot weld is denoted as $t_{weld}$, wherein $t_{all}$ and $t_{weld}$ satisfy formula (1),
   wherein at least one of the two or more steel sheets is a steel sheet having a softened layer in a steel sheet surface layer,
   wherein, in a base metal zone in the steel sheet having the softened layer, a nanoindentation hardness at a position spaced 20 $\mu$m from a surface of the softened layer in a thickness direction is denoted as Hbs, and a nanoindentation hardness at a position spaced 1/4 a thickness from the surface of the softened layer in the thickness direction is denoted as Hbt, and wherein Hbs and Hbt satisfy formula (2):

$$0.5 < t_{weld} / t_{all} < 1.0, \quad (1)$$

$$0.2 < Hbs / Hbt < 0.8. \quad (2)$$

2. The welded member according to claim 1, wherein, in a weld heat affected zone in the steel sheet having the softened layer, when a position that is located on a steel sheet faying surface and is spaced 400 $\mu$m from an edge of a nugget of the resistance spot weld in a direction toward a base metal is defined as a starting point, a nanoindentation hardness at a position spaced 20 $\mu$m from the starting point in the thickness direction is denoted as Hws, and a nanoindentation hardness at a position spaced 1/4 the thickness from the starting point in the thickness direction is denoted as Hwt, and wherein Hws, Hwt, and Hbs satisfy formulas (3) and (4):

$$0.2 < Hws / Hwt < 1.0, \quad (3)$$

$$0.8 < Hws / Hbs < 7.0. \quad (4)$$

3. The welded member according to claim 1 or 2, wherein a thickness of the steel sheet is denoted as t (mm), and a tensile strength of the steel sheet is denoted as TS (MPa), and

   wherein the steel sheet having the softened layer satisfies formula (5):

   $-\{(1000 \times t / TS) - 0.25\} / 35 + 0.2 < (Hws / Hwt) < 1.0,$ (5)           (5)

where, in formula (5), Hws is a nanoindentation hardness at a position spaced 20 $\mu$m from the starting point in the thickness direction, and Hwt is a nanoindentation hardness at a position spaced 1/4 the thickness from the starting point in the thickness direction.

4.   The welded member according to claim 1 or 2, wherein the steel sheet having the softened layer includes a Si internally oxidized layer and/or a galvanized layer.

5.   The welded member according to claim 4, wherein an Fe-based precoated layer is disposed below the galvanized layer.

6.   The welded member according to claim 1 or 2, wherein an average of a shortest distance from a center of a welding point of the resistance spot weld to an end face of the steel sheets is 3 mm or more, and
wherein, when the welded member has a plurality of the welding points, an average of center-to-center distances between adjacent ones of the welding points is 6 mm or more.

7.   A method for producing the welded member according to any one of claims 1 to 6, the method comprising:

a preparation step of disposing the two or more steel sheets so as to overlap each other to form the sheet set; and a welding step of resistance-spot-welding the sheet set,
wherein, in the welding step, the sheet set is held between a pair of welding electrodes to perform energization for joining under application of pressure,
wherein the energization is performed at a welding pressure of 2.0 to 10.0 kN and a welding current of 4.0 to 15.0 kA for an energization time of 0.1 to 2.0 s, and
wherein the welding step further includes an electrode holding step in which, when a welding pressure holding time after completion of the energization is denoted as Th (s), Th (s) satisfies the relation of formula (7):

$$\{(Hbs / Hbt) - 0.2\} / 30 < Th < [-\{(Hbs / Hbt) - 0.2\} / 3] + 1.2, (7) \tag{7}$$

where, in formula (7), Hbs is the nanoindentation hardness at the position spaced 20 $\mu$m from the surface of the softened layer in the thickness direction within the base metal zone, and Hbt is the nanoindentation hardness at the position spaced 1/4 the thickness from the surface of the softened layer in the thickness direction within the base metal zone.

8.   A method for producing the welded member according to any one of claims 1 to 6, the method comprising:

a preparation step of disposing the two or more steel sheets so as to overlap each other to form the sheet set; and a welding step of resistance-spot-welding the sheet set,
wherein, in the welding step,
the sheet set is held between a pair of welding electrodes to perform energization for joining under application of pressure, and
one or two or more of states (a) to (e) are satisfied at at least one welding point immediately before the application of the pressure by the welding electrodes,
wherein the welding step includes
an energization step of performing the energization at a welding pressure of 2.0 to 10.0 kN and a welding current of 4.0 to 15.0 kA for an energization time of 0.1 to 2.0 s and
an electrode holding step in which, when a welding pressure holding time after completion of the energization is denoted as Th (s), Th satisfies the relation of formula (7) :

(a) a state in which an inclination angle between the welding electrodes and the overlapping steel sheets is 0.2 degrees or more;
(b) a state in which an amount of offset between the pair of welding electrodes is 0.1 mm or more;
(c) a state in which a gap of 0.5 mm or more is present between one of the welding electrodes and the overlapping steel sheets;
(d) a state in which a gap of 0.5 mm or more is present between at least one pair of steel sheets among the overlapping steel sheets; and
(e) a state in which a shortest distance from a center of the at least one welding point to a steel sheet end face of the overlapping steel sheets is 10 mm or less:

$$\{(Hbs / Hbt) - 0.2\} / 30 < Th < [-\{(Hbs / Hbt) - 0.2\} / 3] + 1.2, (7) \tag{7}$$

where, in formula (7), Hbs is the nanoindentation hardness at the position spaced 20 $\mu$m from the surface of the softened layer in the thickness direction within the base metal zone, and Hbt is the nanoindentation hardness at the position spaced 1/4 the thickness from the surface of the softened layer in the thickness direction within the base metal zone.

# FIG. 1

# FIG. 2

FIG. 3

(A)

(B)

(C)

FIG. 4

# FIG. 5

# FIG. 6

# FIG. 7

FIG. 8

**EP 4 563 272 A1**

<table>
<tr><td colspan="2">INTERNATIONAL SEARCH REPORT</td><td>International application No.<br><br>**PCT/JP2023/033590**</td></tr>
</table>

**A.  CLASSIFICATION OF SUBJECT MATTER**

*B23K 11/11*(2006.01)i; *B23K 11/16*(2006.01)i
FI:   B23K11/16 101; B23K11/16 311; B23K11/11 540

According to International Patent Classification (IPC) or to both national classification and IPC

**B.  FIELDS SEARCHED**

Minimum documentation searched (classification system followed by classification symbols)

B23K11/00-11/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 2020-82102 A (KOBE STEEL, LTD.) 04 June 2020 (2020-06-04)<br>entire text, all drawings | 1-8 |
| A | WO 2021/019947 A1 (JFE STEEL CORP.) 04 February 2021 (2021-02-04)<br>entire text, all drawings | 1-8 |
| A | WO 2016/171237 A1 (NIPPON STEEL & SUMITOMO METAL CORP.) 27 October 2016 (2016-10-27)<br>entire text, all drawings | 1-8 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **25 October 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/033590**

| Patent document cited in search report | | | Publication date (day/month/year) | Patent family member(s) | | | Publication date (day/month/year) |
|---|---|---|---|---|---|---|---|
| JP | 2020-82102 | A | 04 June 2020 | US | 2021/0404496 | A1 | |
| | | | | entire text, all drawings | | | |
| | | | | WO | 2020/105325 | A1 | |
| | | | | EP | 3862125 | A1 | |
| | | | | CN | 112996625 | A | |
| WO | 2021/019947 | A1 | 04 February 2021 | US | 2022/0251676 | A1 | |
| | | | | entire text, all drawings | | | |
| | | | | EP | 4006190 | A1 | |
| | | | | CN | 114008234 | A | |
| | | | | KR | 10-2022-0013405 | A | |
| WO | 2016/171237 | A1 | 27 October 2016 | US | 2018/0105908 | A1 | |
| | | | | entire text, all drawings | | | |
| | | | | EP | 3287539 | A1 | |
| | | | | CN | 107532266 | A | |
| | | | | KR | 10-2017-0130508 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10195597 A
- JP 2003103377 A
- JP 2003236676 A